# FASCICULE DE BREVET EUROPEEN

(11) **EP 3 582 608 B1**
(45) Date de publication et mention de la délivrance du brevet: **07.04.2021**
(21) Numéro de dépôt: 18706794.7
(22) Date de dépôt: 05.02.2018
(51) Int. Cl.: A01G 13/02, A01G 25/02

(54) **ÉLÉMENT DE COUVERTURE DE SOL A POSER, NOTAMMENT SUR UN SOL CULTIVE, ET DISPOSITIF DE COUVERTURE COMPRENANT DE TELS ÉLÉMENTS DE COUVERTURE DE SOL**
ZU VERLEGENDES BODENABDECKELEMENT, VOR ALLEM AUF KULTIVIERTEM BODEN, UND ABDECKVORRICHTUNG MIT SOLCHEN BODENABDECKELEMENTEN
GROUND COVERING ELEMENT TO BE LAID, NOTABLY ON CULTIVATED LAND, AND COVERING DEVICE COMPRISING SUCH GROUND COVERING ELEMENTS

(30) Priorité: 16.02.2017 FR 1751258
(43) Date de publication de la demande: 25.12.2019
(73) Titulaire: Institut national de recherche pour l'agriculture, l'alimentation et l'environnement, 75007 Paris (FR); Inovinea, 34720 Caux (FR)
(72) Inventeur: GELAY-TURTAUT, Céline, 01380 Bage-la-Ville (FR); PLU, Pascal, 34200 Sete (FR); SOUQUET, Jean-Guilhem, 34720 Caux (FR); OULHIOU, William, 34510 Florensac (FR); OULHIOU, Pascal, 34720 Caux (FR); OULHIOU, Christelle, 34720 Caux (FR); OULHIOU, Thierry, 34720 Caux (FR); ROSIQUE, Patrick, 12490 Montjaux (FR)
(74) Mandataire: Ipsilon
(86) Numéro de dépôt international: PCT/FR2018/050281
(87) Numéro de publication internationale: WO 2018/150120

(56) Documents cités:
- WO-A2-2006/106518
- DE-A1- 4 408 556
- FR-A1- 2 676 613
- JP-A- 2005 341 903
- KR-A- 20110 008 516

## Description

### DOMAINE DE L'INVENTION

L'invention concerne un élément de couverture de sol à poser, notamment sur un sol cultivé, et un dispositif de couverture comprenant de tels éléments de couverture de sol.

Elle concerne plus particulièrement un élément de couverture de sol, à poser sur un sol cultivé, de manière à recouvrir une surface du sol autour de la plante dont on veut favoriser la pousse, ledit élément de couverture affectant la forme d'une plaque à bords longitudinaux tombés conférant à ladite plaque une forme générale de U en section transversale, ledit U étant, en configuration d'utilisation dudit élément de couverture, à l'état posé dudit élément de couverture sur le sol à traiter, ouvert vers le sol avec l'âme du U présentant une face dite du dessous tournée vers le sol et une face du dessus opposée, ladite plaque étant munie, le long de chacun de ses bords transversaux, au niveau de l'âme du U, d'une encoche apte à délimiter un passage de plante.

### ART ANTÉRIEUR

Un tel élément de couverture de sol est connu, comme l'illustrent les brevets FR2676613 A1, DE4408556 A1, WO2006/106518 A2.

Cet élément de couverture, plus particulièrement adapté aux plantations en ligne, est destiné à permettre de limiter, voire de supprimer les interventions mécaniques ou chimiques sous les rangs de plantations alignées.

Un tel élément de couverture pose aujourd'hui, en termes de gestion de l'eau, problème. En effet, il peut entraîner, par excès d'eau sous la plaque, un pourrissement des plantations ou, à l'inverse, par manque d'eau, une mortalité de la plante par dessèchement.

On est donc à la recherche, aujourd'hui, d'une solution permettant d'optimiser la gestion de l'eau, tant en termes d'eau d'arrosage que d'eau de pluie.

### BUT ET RÉSUMÉ

Un but de l'invention est donc de proposer un élément de couverture dont la conception permet une optimisation de l'arrosage des plantations par irrigation, tout en évitant un ruissellement inapproprié des eaux de pluie et une érosion des sols.

À cet effet, l'invention a pour objet un élément de couverture de sol, à poser notamment sur un sol cultivé, de manière à recouvrir une surface du sol autour de la plante dont on veut favoriser la pousse, ledit élément de couverture affectant la forme d'une plaque à bords longitudinaux tombés conférant à ladite plaque une forme générale de U en section transversale, ledit U étant, en configuration d'utilisation dudit élément de couverture, à l'état posé dudit élément de couverture sur le sol à traiter, ouvert vers le sol avec l'âme du U présentant une face dite du dessous tournée vers le sol et une face du dessus opposée, ladite plaque étant munie, le long de chacun de ses bords transversaux, au niveau de l'âme du U, d'une encoche apte à délimiter un passage de plante, où la face du dessus de l'âme du U de la plaque est munie d'une ou plusieurs rainures longitudinales formant chacune une gorge et d'une ou plusieurs nervures transversales, la ou au moins l'une des rainures longitudinales aptes à former un chemin de guidage pour la réception à emboîtement d'un tuyau d'irrigation étant munie d'un ou plusieurs orifices traversants de vidange de ladite rainure longitudinale, et en ce que la ou au moins l'une des nervures transversales est interrompue au niveau de la ou d'au moins l'une des rainures longitudinales.

La présence d'une ou plusieurs rainures longitudinales se présentant chacune sous forme d'une moulure creuse, de préférence de forme générale arrondie et formant chacune une gorge ou un canal, permet de positionner de manière sûre le ou les tuyaux d'irrigation, généralement de type goutte à goutte, et d'assurer une continuité d'arrosage d'un élément à un autre. La réalisation d'orifices traversants de vidange de la rainure en des emplacements appropriés de ladite rainure permet une vidange de la rainure au plus près des plantations, pour un arrosage approprié de ladite plantation.

Le logement de chaque tuyau d'irrigation dans une rainure permet d'éviter un endommagement des tuyaux d'irrigation, soit par les machines lorsque ces derniers sont posés au sol comme dans l'état de la technique, soit par les animaux lorsque ceux-ci sont disposés à hauteur.

La présence d'une ou plusieurs nervures transversales permet de former un ou plusieurs obstacles au ruissellement de l'eau de pluie sur la face du dessus de la plaque posée au sol, généralement de manière inclinée, depuis un point haut disposé à l'extrémité de la ou de l'une des rainures longitudinales en direction d'un point bas disposé à l'autre extrémité de ladite rainure longitudinale. Cette limitation du ruissellement permet d'éviter la formation de ruisseaux qui pourraient venir ensuite lessiver les sols. Enfin, la disposition relative des rainures et des nervures permet à tout moment, grâce aux rainures, une mise en place et un enlèvement aisés du ou des tuyaux d'irrigation, sans que ces opérations ne soient gênées par la présence des nervures.

Selon un mode de réalisation de l'invention, la ou au moins l'une des nervures transversales se prolonge au-delà de l'âme du U sur au moins l'un des bords longitudinaux tombés de la plaque.

Selon un mode de réalisation de l'invention, la ou au moins l'une des rainures longitudinales, ouverte à chacune de ses extrémités, s'étend d'un bord transversal à l'autre bord transversal de la plaque et se développe d'un bord transversal à l'autre sans passer par lesdites encoches.

Il en résulte la possibilité d'une continuité de guidage et d'arrosage d'un élément de couverture à un autre, sans risque d'un endommagement des plantes.

Selon un mode de réalisation de l'invention, dans lequel la ou au moins l'une des rainures longitudinales est munie d'une pluralité à savoir d'au moins deux orifices de vidange, les orifices de vidange de la rainure longitudinale sont disposés chacun, au voisinage d'un bord transversal de la plaque, au niveau de l'une des encoches de la plaque. Ainsi, il en résulte un arrosage optimal de la plante située au niveau d'une encoche.

Selon un mode de réalisation de l'invention dans lequel l'élément de couverture de sol comprend plusieurs à savoir au moins deux rainures longitudinales, lesdites rainures longitudinales sont parallèles entre elles et s'étendent de part et d'autre des encoches pour encadrer ces dernières.

Selon un mode de réalisation de l'invention, l'âme du U est munie, le long de l'axe longitudinal de la plaque passant par les encoches, de préférence à équidistance desdites encoches, d'une partie détachable ou découpable apte à délimiter, à l'état détaché ou découpé, un passage traversant. Il en résulte la possibilité, par exemple, d'enfiler la plaque sur un pieu.

Selon un mode de réalisation de l'invention, au moins l'une, de préférence chacune des encoches est munie d'un rebord en saillie de la face du dessus de l'âme du U de la plaque, ce rebord s'étendant sur une partie du pourtour de l'encoche. Ce rebord permet de fixer plus aisément et de manière centrée, un manchon ou un bouchon au niveau de l'ouverture délimitée par ladite encoche.

Selon un mode de réalisation de l'invention, le rebord de l'encoche est muni, sur sa surface périphérique externe tournée vers l'extérieur de l'encoche, d'au moins un motif en relief ou godron. À nouveau, ce motif en relief aide à la fixation de pièces au niveau de ladite encoche.

Selon un mode de réalisation de l'invention, l'une des extrémités de la plaque est munie, à la manière d'un soyage, d'un décrochement pour permettre un assemblage sans surépaisseur dudit élément de couverture avec un élément de couverture similaire à l'état disposé bout à bout et à chevauchement partiel dudit élément de couverture avec un élément de couverture similaire.

Le positionnement bout à bout, à recouvrement partiel, desdits éléments de couverture, permet le positionnement des plantes dans les réservations définies par la juxtaposition à recouvrement partiel des encoches respectives desdits éléments de couverture.

Selon un mode de réalisation de l'invention, les extrémités de la plaque sont munies l'une, d'au moins un organe mâle, l'autre, d'au moins un organe femelle complémentaire, pour permettre un assemblage dudit élément de couverture avec un élément de couverture similaire par coopération des organes mâle et femelle desdits éléments de couverture à l'état disposé bout à bout et à chevauchement partiel dudit élément de couverture avec ledit élément de couverture similaire.

L'assemblage par coopération d'organes mâle/femelle permet de limiter le risque de désassemblage intempestif des éléments de couverture.

De préférence, les organes mâle et femelle de l'élément de couverture sont respectivement conformés pour permettre, à l'état assemblé dudit organe mâle ou respectivement femelle, dudit élément de couverture avec l'organe femelle, ou respectivement mâle, d'un élément de couverture similaire adjacent, un assemblage avec jeu suivant l'axe longitudinal de la plaque.

En particulier, le ou au moins l'un des organes mâles affecte la forme d'un plot et le ou au moins l'un des organes femelles affecte la forme d'une lumière longitudinale, ledit plot étant dimensionné pour pouvoir coulisser dans ladite lumière.

Ce jeu axial suivant l'axe longitudinal permet de faire varier à volonté les dimensions des réservations définies par la juxtaposition à recouvrement partiel des encoches, tout en maintenant les éléments de couverture à l'état assemblé.

Selon un mode de réalisation de l'invention, la face du dessus de l'âme du U est munie de motifs en creux aptes à former, côté face du dessous de l'âme, des bossages.

Ces bossages facilitent un stockage à l'état empilé des éléments de couverture de sol, en maintenant un espace libre entre les âmes de U de la pile d'éléments de couverture sur une partie de la surface de chaque âme.

Selon un mode de réalisation de l'invention, les bords longitudinaux tombés de la plaque formant les branches du U sont, au niveau de leur bord dit libre, opposé à leur bord de raccordement à l'âme du U, repliés en direction de l'extérieur du U pour former chacun une aile du U. Cette aile aide à chaque fois au maintien en terre de l'élément de couverture.

L'invention a encore pour objet un dispositif de couverture de sol comprenant au moins deux éléments de couverture de sol positionnables bout à bout à chevauchement partiel, caractérisé en ce que chaque élément de couverture est conforme à celui décrit ci-dessus.

Selon un mode de réalisation de l'invention, le dispositif de couverture de sol comprend au moins un accessoire affectant la forme d'un couvercle ou d'un manchon, positionnable à recouvrement du passage de plante délimité par les encoches en regard de deux éléments de couverture à l'état positionné bout à bout et à chevauchement partiel desdits éléments de couverture.

### BRÈVE DESCRIPTION DES DESSINS

L'invention sera bien comprise à la lecture de la description suivante d'exemples de réalisation, en référence aux dessins annexés dans lesquels :

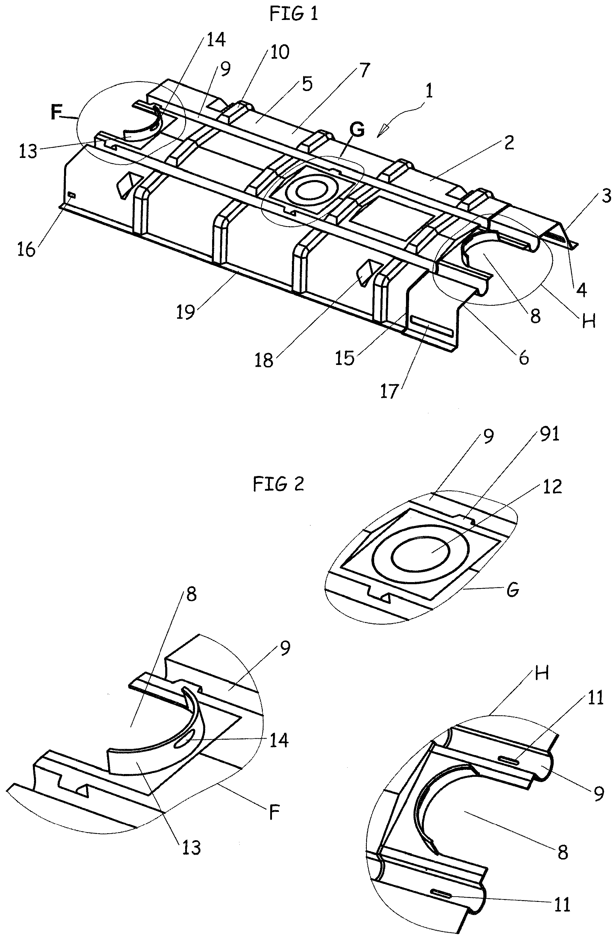

- La figure 1 représente une vue en perspective d'un élément de couverture de sol conforme à l'invention.
- La figure 2 représente des vues de détail F, G et H de la figure 1.
- La figure 3 représente une vue en perspective de deux éléments de couverture de sol prêts à être assemblés.
- La figure 4 représente une vue en perspective d'un dispositif de couverture de sol comprenant deux éléments de couverture de sol.
- La figure 5 représente une vue en perspective d'un dispositif de couverture de sol en situation.
- La figure 6 représente une vue de détail J de la figure 5.
- La figure 7 représente une vue en coupe transversale d'un élément de couverture de sol.

### DESCRIPTION DÉTAILLÉE

Comme mentionné ci-dessus, l'invention a pour objet un élément 1 de couverture de sol à poser sur un sol, en particulier un sol cultivé, ainsi qu'un dispositif de couverture de sol formé par l'assemblage de tels éléments 1 de couverture de sol.

Un tel élément 1 de couverture de sol permet de recouvrir une surface du sol autour du ou des plants de culture dont on veut favoriser la pousse, et d'empêcher ainsi la prolifération des mauvaises herbes indésirables.

Cet élément 1 de couverture de sol se présente sous forme d'une plaque 2 comprenant deux bords 3 longitudinaux tombés, conférant à la plaque 2 en section transversale une forme générale de U ouvert vers le sol. Cette plaque 2 comporte encore deux bords 4 transversaux qui s'étendent sensiblement orthogonalement aux bords 3 longitudinaux.

Cette plaque préfabriquée peut être une plaque moulée par injection ou autre, ou une plaque thermoformée. Cette plaque 2 est généralement en matière de synthèse, et en particulier en matière plastique vierge ou recyclée pour résister dans le temps.

L'élément 1 de couverture de sol est, en configuration d'utilisation, c'est-à-dire à l'état posé dudit élément 1 de couverture sur le sol à traiter, disposé avec le U ouvert vers le sol. Ainsi, l'élément 1 de couverture de sol repose au sol par les branches du U formées par les bords 3 tombés de la plaque 2.

Pour parfaire cet appui au sol, dans l'exemple représenté, les bords 3 longitudinaux tombés de la plaque 2 formant les branches du U sont, au niveau de leur bord libre opposé à leur bord de raccordement à l'âme 5 du U, repliés en direction de l'extérieur du U pour former chacun une aile 19 du U. Cette aile 19 d'appui au sol du U est recouverte par de la terre lors de l'enfoncement de l'élément 1 de couverture dans le sol. Cette aile 19 d'appui au sol du U favorise le maintien au sol de l'élément 1 de couverture.

L'âme 5 du U présente quant à elle, en configuration d'utilisation de l'élément 1 de couverture, une face 6 du dessous tournée vers le sol et une face 7 du dessus opposée. La face 6 du dessous est généralement écartée du sol d'une distance comprise entre deux et trois centimètres. Enfin, la plaque 2 est munie, le long de chacun de ses bords 4 transversaux, au niveau de l'âme 5 du U, d'une encoche 8 en demi-rond apte à délimiter un passage de plante.

Ainsi, en configuration d'utilisation de l'élément 1 de couverture, au moins un plant de culture peut s'étendre à l'aplomb de l'une des encoches de l'élément de couverture de sol, et faire saillie de l'élément 1 de couverture à travers ladite encoche 8.

La face 7 de dessus de l'âme du U de la plaque 2 est munie d'une ou plusieurs rainures 9 longitudinales formant chacune une gorge, et d'une ou plusieurs nervures 10 transversales. La ou au moins l'une des rainures 9 longitudinales apte à former un chemin de guidage pour la réception à emboîtement d'un tuyau 23 d'irrigation, généralement de type goutte à goutte, est munie d'un ou plusieurs orifices 11 traversants de vidange de ladite rainure 9 longitudinale.

Dans l'exemple représenté, la face 7 du dessus de l'âme 5 du U est munie de deux rainures longitudinales se présentant chacune sous forme d'une moulure creuse de forme générale arrondie. Chaque rainure 9 longitudinale ouverte à chacune de ses extrémités s'étend d'un bord 4 transversal à l'autre bord 4 transversal de la plaque 2 et se développe d'un bord transversal à l'autre, sans passer par lesdites encoches 8.

En particulier, dans l'exemple représenté, les deux rainures 9 longitudinales sont parallèles entre elles et s'étendent de part et d'autre des encoches 8 pour encadrer ces dernières. Ces rainures 9 longitudinales sont, en outre, parallèles à l'axe longitudinal médian de la plaque.

Chaque rainure 9 longitudinale est munie de deux orifices 11 de vidange disposés l'un au voisinage d'une extrémité de la rainure longitudinale, l'autre au voisinage de l'autre extrémité de la rainure longitudinale, au niveau d'une encoche, c'est-à-dire le long d'une ligne transversale à l'axe longitudinal de la plaque passant par une encoche, pour permettre un arrosage de la plante 20 disposée dans l'encoche 8.

Chaque rainure 9 longitudinale peut être utilisée comme chemin de guidage d'un tuyau 23 d'irrigation en goutte à goutte. Dans ce cas, il est prévu deux tuyaux d'irrigation.

En variante, un seul tuyau d'irrigation disposé à l'intérieur de l'une des rainures 9 longitudinales peut être prévu.

En variante, il aurait également pu être prévu de concevoir un élément de couverture de sol avec une seule rainure 9 longitudinale.

La face 7 du dessus de l'âme 5 du U de la plaque est encore munie d'au moins une, en l'occurrence, ici, plusieurs nervures 10 transversales. Ces nervures 10 transversales sont ici au nombre de quatre. Ces nervures 10 sont parallèles entre elles et s'étendent dans l'espace, entre les encoches 8.

Les nervures 10 transversales et les rainures 9 longitudinales forment un angle droit entre elles. Chaque nervure 10 transversale qui s'étend au moins d'un bord longitudinal à l'autre bord longitudinal de l'âme du U de la plaque est interrompue au niveau d'une rainure 9 longitudinale pour ne pas gêner la mise en place d'un tuyau 23 d'irrigation à l'intérieur d'une rainure 9 longitudinale.

Dans l'exemple représenté, chaque nervure 10 transversale se prolonge au-delà de l'âme 5 du U sur chacun des bords 4 longitudinaux tombés de la plaque 2. Ainsi, chaque nervure 10 est formée de trois tronçons, à savoir un premier tronçon disposé entre le bord libre d'un premier bord tombé et l'une des rainures 9 longitudinales, un deuxième tronçon disposé entre lesdites rainures 9 longitudinales et un troisième tronçon disposé entre l'autre des rainures 9 longitudinale et le bord libre du deuxième bord tombé. Lesdites nervures longitudinales forment un obstacle à un libre ruissellement de l'eau, sur la face du dessus de l'âme, suivant l'axe longitudinal de la plaque.

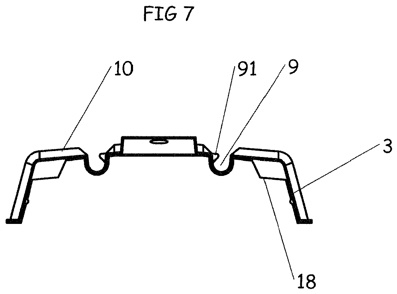

On note, comme l'illustre la figure 7, que, dans l'exemple représenté, l'âme du U ne forme pas une surface rectiligne. En effet, la face du dessus de la plaque est parallèle au plan d'appui au sol de la plaque dans la partie disposée entre lesdites rainures longitudinales, puis forme une surface inclinée avec un très faible degré d'inclinaison (inférieur à 5°) entre chaque rainure longitudinale et le bord tombé le plus proche de la rainure, ladite pente étant à pente descendante depuis la rainure en direction du bord tombé, de sorte que l'eau ruisselant le long de la face du dessus de la plaque est stoppée par une nervure et tend à être guidée vers le bord tombé de la plaque.

L'âme 5 du U est munie, le long de l'axe longitudinal de la plaque 2 passant par les encoches 8, d'une partie 12 détachable ou découpable, apte à délimiter à l'état détaché ou découpé un passage traversant. Cette partie 12 détachable est ici disposée à équidistance des encoches 8. Cette partie 12 détachable affecte la forme d'un disque. Pour faciliter le détachement, des amorces de rupture sont prévues dans la plaque. Le passage traversant ainsi délimité peut permettre d'enfiler l'élément de couverture sur un pieu, support de végétation, dans le cas, par exemple, d'une application de l'élément de couverture de sol à la vigne. Une rondelle 22 de fermeture de l'espace libre entre pieu et passage traversant peut être enfilée sur le pieu jusqu'à venir en appui sur la face du dessus de l'âme du U de la plaque.

Comme mentionné ci-dessus, la plaque 2 est munie, au niveau de chacun de ses bords 4 transversaux, d'une encoche 8. Ces encoches 8 sont disposées chacune sensiblement au milieu du bord 4 transversal de la plaque 2.

Dans l'exemple représenté, chacune des encoches 8 est munie d'un rebord 13 en saillie de la face 7 du dessus de l'âme 5 du U de la plaque 2. Ce rebord 13 s'étend sur une partie du pourtour de l'encoche 8 appelée fond de l'encoche 8, et est disposé en regard du débouché de l'encoche 8 dans le bord transversal de la plaque 2. Le débouché et le fond de l'encoche 8 sont reliés entre eux par des parties du pourtour de l'encoche 8 appelées flancs latéraux de l'encoche 8.

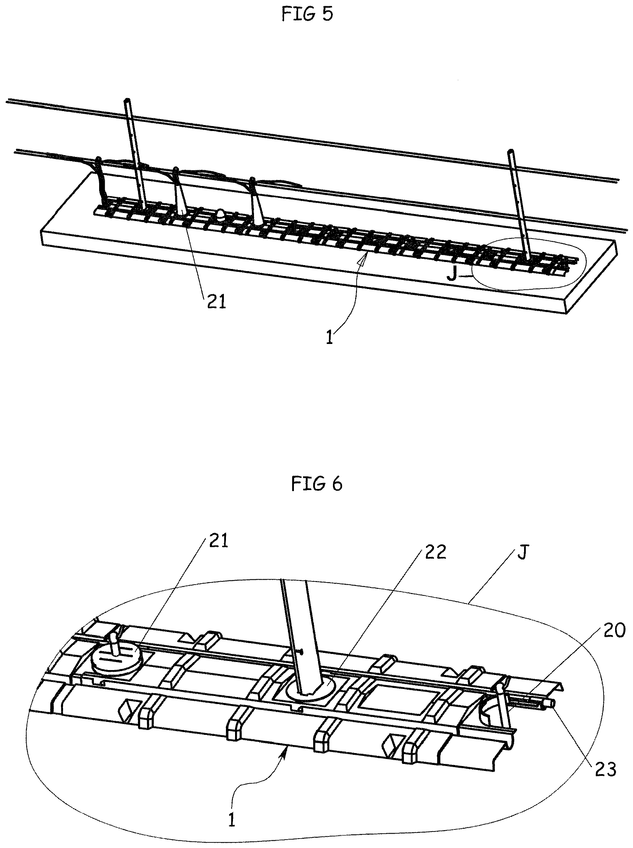

Ce rebord 13 de l'encoche 8 est muni, sur sa surface périphérique externe tournée vers l'extérieur de l'encoche 8, d'au moins un motif en relief ou godron 14. Ce rebord 13 et le ou les motifs en relief associés favorisent la fixation sur l'élément 1 de couverture de sol d'un bouchon 21 généralement souple muni ou non d'un passage central, comme illustré à la figure 6, ou d'un manchon formant gaine comme illustré à la figure 5. Cette gaine empêche la pousse de pampres dans le cas d'une application à la vigne.

Chaque élément 1 de couverture de sol est généralement assemblé avec un autre élément de couverture de sol, pour former une ligne d'éléments 1 de couverture de sol appelée dispositif de couverture de sol.

À l'état assemblé de deux éléments 1 de couverture de sol entre eux, lesdits éléments 1 de couverture de sol sont disposés dans le prolongement axial l'un de l'autre, avec l'un des éléments 1 de couverture de sol venant, par son extrémité munie de l'un des bords transversaux de la plaque, à recouvrement de l'autre élément de couverture au niveau de l'extrémité dudit élément muni de l'un des bords transversaux de la plaque, de sorte que les encoches 8 desdits éléments 1 de couverture de sol juxtaposés forment, dans la zone de recouvrement desdits éléments 1 de couverture de sol, une réservation délimitant un passage traversant pour le passage d'une plante 20.

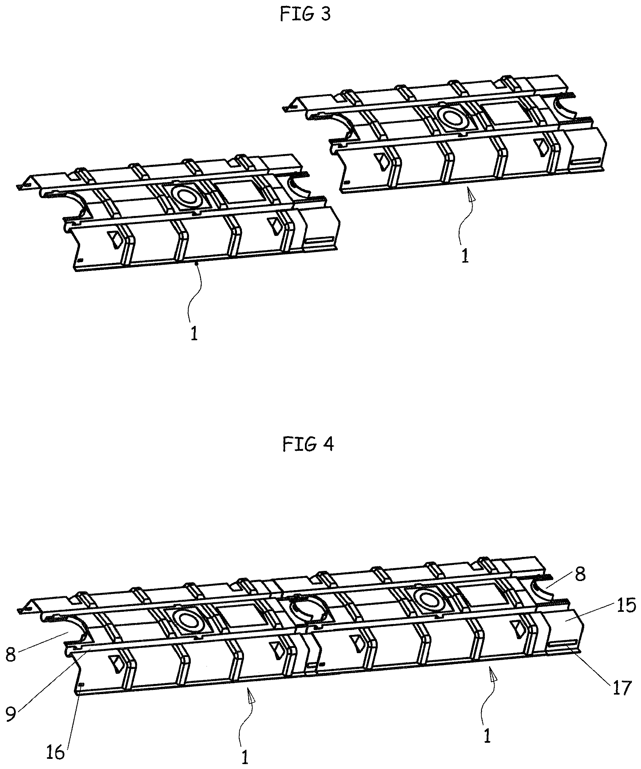

Dans la zone de recouvrement et comme illustré à la figure 4, les rainures 9 longitudinales de l'élément 1 de couverture de sol, dit supérieur, se logent à emboîtement dans les rainures longitudinales de l'élément 1 de couverture de sol, dit inférieur, et les orifices 11 de vidange desdites rainures 9 longitudinales des éléments 1 de couverture de sol supérieur et inférieur superposés sont à l'aplomb l'un de l'autre. Ce logement à emboîtement des rainures 9 longitudinales permet un montage à emboîtement coulissant des éléments 1 de couverture de sol entre eux, entre une position rapprochée et une position écartée l'un de l'autre, pour faire varier la dimension de la réservation formée par les encoches 8 et permettre de s'adapter à l'entraxe variable entre deux plants de culture ou à la dimension du plant de culture.

Pour éviter, dans la zone de recouvrement desdits éléments de couverture de sol entre eux, la formation d'une surépaisseur, l'une des extrémités de la plaque 2 est munie, à la manière d'un soyage, d'un décrochement 15. Ce décrochement 15 prend naissance dans la zone disposée entre les encoches. Ce décrochement 15 marque une limite de la partie de moindre hauteur de la plaque en configuration d'utilisation. Cette partie de moindre hauteur de la plaque s'étend entre le décrochement et le bord transversal de la plaque le plus proche du décrochement. Cette partie de moindre hauteur de la plaque correspond à la partie de la plaque pouvant être recouverte par un autre élément de couverture similaire adjacent.

Du fait du montage décrit ci-dessus, la dimension de la zone de recouvrement ménagée par l'assemblage de deux éléments de couverture de sol peut varier par simple déplacement relatif à coulissement des éléments de couverture de sol. Ce déplacement à coulissement peut permettre de faire varier en parallèle la dimension de la réservation définie par les encoches 8 des deux éléments de couverture de sol juxtaposés à recouvrement partiel.

Pour parfaire cet assemblage, les extrémités de la plaque 2 sont munies, l'une d'au moins un organe 16 mâle, l'autre d'au moins un organe 17 femelle complémentaire. Ainsi, chaque plaque est apte à être assemblée avec une plaque similaire adjacente par coopération du ou des organes mâles de l'une des plaques avec le ou les organes femelles de l'autre plaque.

Dans l'exemple représenté, chaque élément 1 de couverture de sol comprend deux organes mâles 16 et deux organes femelles 17. Chaque organe mâle ou femelle est disposé sur un bord tombé de la plaque, dans la partie du bord tombé de la plaque s'étendant au même niveau, suivant une direction transversale à l'axe longitudinal de la plaque, qu'une encoche. Ainsi, chaque plaque présente, au niveau de l'une de ses extrémités, sur chacun de ses bords tombés, un organe mâle 16 formé par un plot en saillie de la face non apparente du bord tombé en configuration d'utilisation de la plaque, et au niveau de l'autre de ses extrémités, sur chacun de ses bords tombés, un organe femelle 17 formé par une fente ou lumière longitudinale.

Dans l'exemple représenté, les organes femelles sont ménagés dans la partie de moindre niveau par rapport au sol, de la plaque. Ainsi, à l'état recouvert de la partie de moindre niveau d'un élément de couverture de sol dit inférieur, par la partie équipée de plots d'un élément de couverture dit supérieur, les plots viennent s'insérer dans les lumières à l'intérieur desquelles ils peuvent coulisser librement pour faire varier la dimension de la réservation formée par les encoches et la dimension en longueur de la ligne ou portion de ligne formée par la disposition en bout à bout et à recouvrement partiel des éléments 1 de couverture de sol.

Pour obtenir cette insertion par encliquetage des plots dans les lumières, une élasticité des éléments 1 de couverture de sol est nécessaire. Il résulte de cette construction une simplicité d'assemblage avec jeu axial des éléments de couverture de sol entre eux. Il suffit ainsi, comme l'illustre la figure 3, de prépositionner l'extrémité munie de plots d'un élément de couverture de sol au-dessus de l'extrémité munie de lumières d'un élément de couverture de sol similaire, puis de presser l'élément de couverture du dessus contre l'élément de couverture du dessous jusqu'à insertion des plots dans les lumières.

Bien évidemment, un montage inverse des plots et des lumières aurait pu être envisagé sans sortir du cadre de l'invention.

À l'état non assemblé, les éléments de couverture de sol peuvent être stockés à l'état empilé. À cet effet, la face 7 du dessus de l'âme 5 du U de chaque élément de couverture est munie de motifs 18 en creux aptes à former, côté face 6 du dessous de l'âme 5, des bossages empêchant un collage des âmes du U des plaques l'une contre l'autre.

Pour la mise en œuvre de tels éléments 1 de couverture de sol, dans le cas par exemple d'une application à une vigne déjà plantée, on peut procéder comme suit : un premier élément est disposé au sol, de sorte que les bords de son encoche entourent partiellement un plan de vigne. Un deuxième élément de couverture est disposé dans le prolongement et à recouvrement partiel de l'extrémité entourant le plan de vigne du premier élément de couverture, pour former, avec l'encoche du premier élément de couverture, un passage traversant duquel fait saillie le plant de vigne. Les éléments de couverture sont assemblés l'un à l'autre par encliquetage des lumières et plots, comme mentionné ci-dessus. La pose des éléments de couverture peut être poursuivie jusqu'à couvrir la longueur d'une ligne de plants. Si un pieu est déjà planté sur la ligne de plants à couvrir, il peut être prévu de détacher la partie 12 détachable d'un élément de couverture de sol pour enfiler l'élément 1 de couverture de sol sur le pieu. Une rondelle 22 peut ensuite être enfilée sur le pieu, jusqu'à venir en appui par le dessus, sur la plaque, comme illustré à la figure 6. De même, des manchons ou couvercles peuvent être rapportés au niveau des encoches. Au moins un tuyau 23 d'irrigation est ensuite disposé dans l'une des gorges formées par l'alignement de rainures longitudinales pour permettre un maintien sûr du tuyau d'irrigation dans ladite gorge. Chaque élément 1 de couverture de sol peut, au niveau de chacune de ses rainures longitudinales servant à la réception d'un tuyau d'irrigation, présenter au niveau d'au moins un flanc longitudinal de la rainure au moins un ergot en saillie en direction de l'intérieur de la rainure. Cet ergot de retenue du tuyau à l'intérieur de la rainure est représenté en 91 aux figures.

Grâce à cette conception de l'élément de couverture de sol et du dispositif de couverture de sol en résultant, la gestion de l'eau est optimisée.

## Revendications

1. Elément (1) de couverture de sol, à poser notamment sur un sol cultivé, de manière à recouvrir une surface du sol autour de la plante (20) dont on veut favoriser la pousse, ledit élément (1) de couverture affectant la forme d'une plaque (2) à bords (3) longitudinaux tombés conférant à ladite plaque (2) une forme générale de U en section transversale, ledit U étant, en configuration d'utilisation dudit élément (1) de couverture, à l'état posé dudit élément (1) de couverture sur le sol à traiter, ouvert vers le sol avec l'âme (5) du U présentant une face (6) dite du dessous tournée vers le sol et une face (7) du dessus opposée, ladite plaque (2) étant munie, le long de chacun de ses bords (4) transversaux, au niveau de l'âme (5) du U, d'une encoche (8) apte à délimiter un passage de plante, où la face (7) du dessus de l'âme (5) du U de la plaque (2) est munie d'une ou plusieurs rainures (9) longitudinales formant chacune une gorge et d'une ou plusieurs nervures (10) transversales, la ou au moins l'une des rainures (9) longitudinales apte à former un chemin de guidage pour la réception à emboîtement d'un tuyau d'irrigation étant munie d'un ou plusieurs orifices (11) traversants de vidange de ladite rainure (9) longitudinale, et en ce que la ou au moins l'une des nervures (10) transversales est interrompue au niveau de la ou d'au moins l'une des rainures (9) longitudinales.

2. Elément (1) de couverture de sol selon la revendication 1, **caractérisé en ce que** la ou au moins l'une des nervures (10) transversales se prolonge au-delà de l'âme (5) du U sur au moins l'un des bords (4) longitudinaux tombés de la plaque (2).

3. Elément (1) de couverture de sol selon l'une des revendications précédentes, **caractérisé en ce que** la ou au moins l'une des rainures (9) longitudinales, ouverte à chacune de ses extrémités, s'étend d'un bord (4) transversal à l'autre bord (4) transversal de la plaque (2) et se développe d'un bord (4) transversal à l'autre sans passer par lesdites encoches (8).

4. Elément (1) de couverture de sol selon l'une des revendications précédentes du type dont la ou au moins l'une des rainures (9) longitudinales est munie d'une pluralité à savoir au moins deux orifices (11) de vidange, **caractérisé en ce que** les orifices (11) de vidange de la rainure (9) longitudinale sont disposés chacun, au voisinage d'un bord (4) transversal de la plaque (2), au niveau de l'une des encoches (8) de la plaque (2).

5. Elément (1) de couverture de sol selon l'une des revendications précédentes du type comprenant plusieurs à savoir au moins deux rainures (9) longitudinales, **caractérisé en ce que** lesdites rainures (9) longitudinales sont parallèles entre elles et s'étendent de part et d'autre des encoches (8) pour encadrer ces dernières.

6. Elément (1) de couverture de sol selon l'une des revendications précédentes, **caractérisé en ce que** l'âme (5) du U est munie, le long de l'axe longitudinal de la plaque (2) passant par les encoches (8), de préférence à équidistance desdites encoches (8), d'une partie (12) détachable ou découpable apte à délimiter à l'état détaché ou découpé un passage traversant.

7. Elément (1) de couverture de sol selon l'une des revendications précédentes, **caractérisé en ce qu'**au moins l'une, de préférence chacune des encoches (8) est munie d'un rebord (13) en saillie de la face (7) du dessus de l'âme (5) du U de la plaque (2), ce rebord (13) s'étendant sur une partie du pourtour de l'encoche (8).

8. Elément (1) de couverture de sol selon la revendication 7, **caractérisé en ce que** le rebord (13) de l'encoche (8) est muni, sur sa surface périphérique externe tournée vers l'extérieur de l'encoche (8), d'au moins un motif en relief ou godron (14).

9. Elément (1) de couverture de sol selon l'une des revendications précédentes, **caractérisé en ce que** l'une des extrémités de la plaque (2) est munie, à la manière d'un soyage, d'un décrochement (15) pour permettre un assemblage sans surépaisseur dudit élément (1) de couverture avec un élément de couverture similaire à l'état disposé bout à bout et à chevauchement partiel dudit élément (1) de couverture avec un élément de couverture similaire.

10. Elément (1) de couverture de sol selon l'une des revendications précédentes, **caractérisé en ce que** les extrémités de la plaque (2) sont munies l'une, d'au moins un organe (16) mâle, l'autre, d'au moins un organe (17) femelle complémentaire, pour permettre un assemblage dudit élément (1) de couverture avec un élément de couverture similaire par coopération des organes mâle et femelle desdits éléments de couverture à l'état disposé bout à bout et à chevauchement partiel dudit élément (1) de couverture avec ledit élément de couverture similaire.

11. Elément (1) de couverture de sol selon la revendication 10, **caractérisé en ce que** les organes mâle (16) et femelle (17) de l'élément (1) de couverture sont respectivement conformés pour permettre à l'état assemblé dudit organe mâle (16) ou respectivement femelle (17), dudit élément (1) de couverture avec l'organe femelle (17), ou respectivement mâle (16), d'un élément (1) de couverture similaire adjacent un assemblage avec jeu suivant l'axe longitudinal de la plaque (2).

12. Elément (1) de couverture de sol selon l'une des revendications 10 et 11, **caractérisé en ce que** le ou au moins l'un des organes mâles (16) affecte la forme d'un plot et le ou au moins l'un des organes femelles (17) affecte la forme d'une lumière longitudinale, ledit plot étant dimensionné pour pouvoir coulisser dans ladite lumière.

13. Elément (1) de couverture de sol selon l'une des revendications précédentes, **caractérisé en ce que** la face (7) du dessus de l'âme (5) du U est munie de motifs (18) en creux aptes à former, côté face (6) du dessous de l'âme (5), des bossages.

14. Elément (1) de couverture de sol selon l'une des revendications précédentes, **caractérisé en ce que** les bords (3) longitudinaux tombés de la plaque (2) formant les branches du U sont, au niveau de leur bord dit libre, opposé à leur bord de raccordement à l'âme (5) du U, repliés en direction de l'extérieur du U pour former chacun une aile (19) du U.

15. Dispositif de couverture de sol comprenant au moins deux éléments (1) de couverture de sol positionnables bout à bout à chevauchement partiel, **caractérisé en ce que** chaque élément (1) de couverture est conforme à l'une des revendications 1 à 14.

16. Dispositif de couverture de sol selon la revendication 15, **caractérisé en ce qu'**il comprend au moins un accessoire (21) affectant la forme d'un couvercle ou d'un manchon, positionnable à recouvrement du passage de plante délimité par les encoches (8) en regard de deux éléments (1) de couverture à l'état positionné bout à bout et à chevauchement partiel desdits éléments (1) de couverture.

## Patentansprüche

1. Bodenabdeckelement (1), zu verlegen insbesondere auf einem kultivierten Boden, um eine Oberfläche des Bodens um die Pflanze (20) abzudecken, deren Wachstum gefördert werden soll, wobei das Abdeckelement (1) die Form einer Platte (2) mit abfallenden Längsrändern (3) aufweist, die der Platte (2) im Allgemeinen eine U-Form im Querschnitt verleiht, wobei das U in der Verwendungskonfiguration des Abdeckelements (1) im Zustand, in dem das Abdeckelement (1) auf dem zu behandelnden Boden angebracht ist, zum Boden hin geöffnet ist, wobei der Steg (5) des U eine Fläche (6), bezeichnet als Unterseite, darstellt, die hin zum Boden gedreht ist, und eine gegenüber liegende Fläche der Oberseite (7), wobei die Platte (2) entlang jedes ihrer Querränder (4) auf der Ebene des Stegs (5) des U mit einer Aussparung (8) versehen sind, die ausgelegt ist, um einen Durchgang der Pflanze zu begrenzen, wobei die Fläche (7) der Oberseite des Stegs (5) des U der Platte (2) mit einer oder mehreren Längsnuten (9), die jeweils eine Hohlkehle bilden, und mit einer oder mehreren Querrippen (10) versehen ist, die oder mindestens eine der Längsnuten (9) ausgelegt ist, um einen Führungsweg für die Steckaufnahme eines Bewässerungsrohrs zu bilden, der mit einer oder mehreren quer liegenden Ablauföffnungen (11) der Längsnut (9) versehen ist, und dadurch, dass die oder mindestens eine der Querrippen (10) auf der Ebene der einen oder mindestens einen der Längsnuten (9) unterbrochen ist.

2. Bodenabdeckelement (1) nach Anspruch 1, **dadurch gekennzeichnet, dass** sich die oder mindestens eine der Querrippen (10) über den Steg des U (5) hinaus auf mindestens einen der abfallenden Längsränder (4) der Platte (2) erstreckt.

3. Bodenabdeckelement (1) nach einem der vorhergehenden Ansprüche, **dadurch gekennzeichnet, dass** die oder mindestens eine der Längsnuten (9), geöffnet an jedem ihrer Enden, sich von einem Querrand (4) zum anderen Querrand (4) der Platte (2) erstreckt und sich von einem Querrand (4) zum anderen entwickelt, ohne durch die Aussparungen (8) zu verlaufen.

4. Bodenabdeckelement (1) nach einem der vorhergehenden Ansprüche der Art, bei der die oder mindestens eine der Längsnuten (9) mit einer Vielzahl, d. h. mindestens zwei Ablauföffnungen (11) versehen ist, **dadurch gekennzeichnet, dass** die Ablauföffnungen (11) der Längsnut (9) jeweils benachbart einem Querrand (4) der Platte (2) auf der Ebene einer der Aussparungen (8) der Platte (2) angeordnet sind.

5. Bodenabdeckelement (1) nach einem der vorhergehenden Ansprüche der Art umfassend mehrere, d. h. mindestens zwei Längsnuten (9), **dadurch gekennzeichnet, dass** die Längsnuten (9) parallel zueinander sind und sich auf beiden Seiten der Aussparungen (8) erstrecken, um diese Letzteren zu umrahmen.

6. Bodenabdeckelement (1) nach einem der vorhergehenden Ansprüche, **dadurch gekennzeichnet, dass** der Steg (5) des U entlang der Längsachse der Platte (2), die durch die Nuten (8) verläuft, vorzugsweise in gleicher Entfernung von den Nuten (8) mit einem abnehmbaren oder abschneidbaren Teil (12) versehen ist, der ausgelegt ist, um im abgenommenen oder abgeschnittenen Zustand einen Querdurchgang zu begrenzen

7. Bodenabdeckelement (1) nach einem der vorhergehenden Ansprüche, **dadurch gekennzeichnet, dass** mindestens eine, vorzugsweise jede der Aussparungen (8) mit einer Kante (13) versehen ist, die von der Fläche (7) der Oberseite des Stegs (5) des U der Platte (2) vorspringt, wobei sich diese Kante (13) auf einem Teil des Umfangs der Aussparung (8) erstreckt.

8. Bodenabdeckelement (1) nach Anspruch 7, **dadurch gekennzeichnet, dass** die Kante (13) der Aussparung (8) auf ihrer äußeren peripheren Oberfläche, die hin zur Außenseite der Aussparung (8) gedreht ist, mit mindestens einem Relief- oder Rippenmuster (14) versehen ist.

9. Bodenabdeckelement (1) nach einem der vorhergehenden Ansprüche, **dadurch gekennzeichnet, dass** eines der Enden der Platte (2) nach Art eines Durchzugs eines Absatzes (15) versehen ist, um eine Montage ohne zusätzliche Dicke (1) des Abdeckelements mit einem ähnlichen Abdeckelement im Ende an Ende angeordneten Zustand und in teilweiser Überlappung des Abdeckelements (1) mit einem ähnlichen Abdeckelement zu ermöglichen.

10. Bodenabdeckelement (1) nach einem der vorhergehenden Ansprüche, **dadurch gekennzeichnet, dass** die Enden der Platte (2) zum einen mit mindestens einem Steckerteil (16), zum anderen mit mindestens einem komplementären Buchsenteil (17) versehen sind, um eine Montage (1) des Abdeckelements mit einem ähnlichen Abdeckelement durch Zusammenarbeit des Stecker- und Buchsenteils der Abdeckelemente im Ende an Ende angeordneten Zustand und in teilweiser Überlappung des Abdeckelements (1) mit einem ähnlichen Abdeckelement zu ermöglichen.

11. Bodenabdeckelement (1), nach Anspruch 10, **dadurch gekennzeichnet, dass** die Stecker- (16) und Buchsenteile (17) des Abdeckelements (1) jeweils angepasst sind, um im montierten Zustand des Stecker- (16) bzw. Buchsenteils (17) des Abdeckelements (1) mit dem Buchsen- (17) bzw. Steckerteil (16) eines ähnlichen Abdeckelements (1) benachbart einer Montage mit Spiel gemäß der Längsachse der Platte (2) zu ermöglichen.

12. Bodenabdeckelement (1) nach einem der Ansprüche 10 und 11, **dadurch gekennzeichnet, dass** der oder mindestens einer der Steckerteile (16) die Form eines Blocks aufweist und der oder mindestens einer der Buchsenteile (17) die Form einer Längsöffnung aufweist, wobei der Block abgemessen ist, um in der Öffnung gleiten zu können.

13. Bodenabdeckelement (1) nach einem der vorhergehenden Ansprüche, **dadurch gekennzeichnet, dass** die Fläche (7) der Oberseite des Stegs (5) des U mit Kreuzmustern (18) versehen ist, die ausgelegt sind, um auf der Fläche (6) der Oberseite des Stegs (5) Erhebungen zu bilden.

14. Bodenabdeckelement (1) nach einem der vorhergehenden Ansprüche, **dadurch gekennzeichnet, dass** die abfallenden Längsränder (3) der Platte (2) die Schenkel des U bilden, auf der Ebene ihres als frei bezeichneten Rands gegenüber ihrem Rand zur Verbindung an den Steg (5) des U in Richtung der Außenseite des U gefaltet sind, um jeweils einen Flügel (19) des U zu bilden.

15. Bodenabdeckvorrichtung, umfassend mindestens zwei Bodenabdeckelemente (1), die Ende an Ende in teilweiser Überlappung positioniert werden können, **dadurch gekennzeichnet, dass** jedes Abdeckelement (1) einem der Ansprüche 1 bis 14 entspricht.

16. Bodenabdeckvorrichtung nach Anspruch 15, **dadurch gekennzeichnet, dass** sie mindestens ein Zubehör (21) umfasst, das die Form eines Deckels oder einer Muffe aufweist, die zur Abdeckung des Durchgangs der Pflanze positioniert werden kann, begrenzt durch die Aussparungen (8) gegenüber von zwei Abdeckelementen (1) im positionierten Zustand Ende an Ende und teilweise überlappend der Abdeckelemente (1).

## Claims

1. Ground-covering element (1) to be laid, in particular, on cultivated ground, so as to cover a surface of the ground around the plant (20), the growth of which is to be promoted, said covering element (1) taking the form of a sheet (2) with turned-down longitudinal edges (3) giving said sheet (2) a general U-shaped cross-section, said U being, in the usage configuration of said covering element (1), when said covering element (1) is installed on the ground that is to be treated, open towards the ground with the web (5) of the U having what is referred to as a bottom face (6) facing the ground and an opposite top face (7), said sheet (2) being provided, along each of its transverse edges (4), level with the web (5) of the U, with a cutout (8) capable of delimiting a passage for a plant, where the top face (7) of the web (5) of the U of the sheet (2) is provided with one or multiple longitudinal grooves (9) each forming a channel and with one or multiple transverse ribs (10), the or at least one of the longitudinal grooves (9) being capable of forming a guideway into which an irrigation pipe can be fitted and being provided with one or multiple through-holes (11) for draining said longitudinal groove (9), and the or at least one of the transverse ribs (10) being interrupted level with the longitudinal groove (9) or at least one of the longitudinal grooves (9).

2. Ground-covering element according to Claim 1, **characterized in that** the or at least one of the transverse ribs (10) extends beyond the web (5) of the U on at least one of the turned-down longitudinal edges (4) of the sheet (2).

3. Ground-covering element (1) according to one of the preceding claims, **characterized in that** the or at least one of the longitudinal grooves (9), open at each of its ends, extends from one transverse edge (4) to the other transverse edge (4) of the sheet (2) and evolves from one transverse edge (4) to the other without passing through said notches (8).

4. Ground-covering element (1) according to one of the preceding claims of the type whereof the or at least one of the longitudinal grooves (9) is provided with a plurality of, namely at least two, drainage through-holes (11), **characterized in that** the drainage through-holes (11) of the longitudinal groove (9) are each arranged proximate to a transverse edge (4) of the sheet (2) level with one of the notches (8) of the sheet (2).

5. Ground-covering element (1) according to one of the preceding claims of the type comprising multiple, namely at least two, longitudinal grooves (9), **characterized in that** said longitudinal grooves (9) are parallel to each other and extend on either side of the notches (8) in order to frame said notches.

6. Ground-covering element (1) according to one of the preceding claims, **characterized in that** the web (5) of the U is provided, along the longitudinal axis of the sheet (2) passing through the notches (8), preferably equidistant from said notches (8), with a detachable or cuttable portion (12) capable of delimiting a through-passage in the detached or cut state.

7. Ground-covering element (1) according to one of the preceding claims, **characterized in that** at least one, preferably each, of the notches (8) is provided with a rim (13) projecting from the top face (7) of the web (5) of the U of the sheet (2), said rim (13) extending over a portion of the periphery of the notch (8).

8. Ground-covering element (1) according to Claim 7, **characterized in that** the rim (13) of the notch (8) is provided, on its outer peripheral surface turned towards the outside of the notch (8), with at least one relief or embossed pattern (14).

9. Ground-covering element (1) according to one of the preceding claims, **characterized in that** one of the ends of the sheet (2) is provided, in the manner of crimping, with a recess (15) to allow assembly without extra thickness of said covering element (1) with a covering element similar to the state arranged end-to-end and with partial overlapping of said covering element (1) with a similar covering element.

10. Ground-covering element (1) according to one of the preceding claims, **characterized in that** the ends of the sheet (2) are provided in one case with at least one male member (16) and in the other case with at least one complementary female member (17), in order to allow said covering element (1) to be assembled with a similar covering element by cooperation of the male and female members of said covering elements in the state arranged end-to-end and with partial overlapping of said covering element (1) with said similar covering element.

11. Ground-covering element (1) according to Claim 10 **characterized in that** the male member (16) and the female member (17) of the covering element (1) are each formed so as to allow the assembled state of said male member (16) or said female member (17), respectively, of said covering element (1) with the female member (17) or the male member (16), respectively, of a similar covering element (1) adjacent to an assembly with clearance along the longitudinal axis of the sheet (2).

12. Ground-covering element (1) according to one of Claims 10 and 11, **characterized in that** the or at least one of the male members (16) has the shape of a stud and the or at least one of the female members (17) has the shape of a longitudinal light, said stud being of such a size as to be able to slide in said light.

13. Ground-covering element (1) according to one of the preceding claims, **characterized in that** the top face (7) of the web (5) of the U is provided with recessed patterns (18) capable of forming bosses on the side of the bottom face (6) of the web (5).

14. Ground-covering element (1) according to one of the preceding claims, **characterized in that** the turned-down longitudinal edges (3) of the sheet (2) forming the branches of the U are, level with their so-called free edge, opposite their connecting edge with the web (5) of the U, folded towards the outside of the U so that they each form a wing (19) of the U.

15. Ground-covering device comprising at least two ground-covering elements (1) that can be positioned end-to-end with partial overlapping, **characterized in that** each covering element (1) is in accordance with one of Claims 1 to 14.

16. Ground-covering device according to Claim 15, **characterized in that** it comprises at least one accessory (21) in the form of a cover or a sleeve that can be positioned to cover the plant passage delimited by the notches (8) opposite two covering elements (1) in the state positioned end-to-end and with said covering elements (1) partially overlapping.
